# EUROPEAN PATENT SPECIFICATION

(11) **EP 2 700 492 B1**
(45) Date of publication and mention of the grant of the patent: **01.02.2017**
(21) Application number: 12181596.3
(22) Date of filing: 23.08.2012
(51) Int. Cl.: B29C 70/44, B29C 70/54

(54) **Infusion method and structure for infusion method**
Infusionsverfahren und Struktur für Infusionsverfahren
Procédé d'infusion et structure pour procédé d'infusion

(43) Date of publication of application: 26.02.2014
(73) Proprietor: Airbus Operations GmbH, 21129 Hamburg (DE)
(72) Inventor: Hülnhagen, Jan, 52064 Aachen (DE); Seegel, Hauke, 21129 Hamburg (DE)
(74) Representative: Kopf Westenberger Wachenhausen Patentanwälte PartG mbB

(56) References cited:
- WO-A1-2009/003477
- WO-A2-2012/026980
- MIRACLE & S L DONALDSON D B ED - MIRACLE & S L DONALDSON D B: "Composites, Vacuum Infusion", 1 December 2001 (2001-12-01), ASM HANDBOOK / PREPARED UNDER THE DIRECTION OF THE ASM INTERNATIONAL HANDBOOK COMMITTEE, ASM INTERNATIONAL, MATERIALS PARK, OHIO ,USA, PAGE(S) 501 - 511, XP002619563, ISBN: 978-0-87170-703-1 * page 501, column 1 * * page 505, column 1 * * page 506, column 1 - column 3 * * page 507, column 3 - page 508, column 2; figure 19 * * page 509, column 1 * * page 510, column 1 * * page 511, column 2 * * page 512, column 1 * * page 514, column 1 *

## Description

The invention relates to an infusion method for producing a fibre-reinforced composite component from at least two construction components, which form at least one overlapping area, according to the preamble of claim 1, and a structure for performing such an infusion method according to the preamble of claim 6.

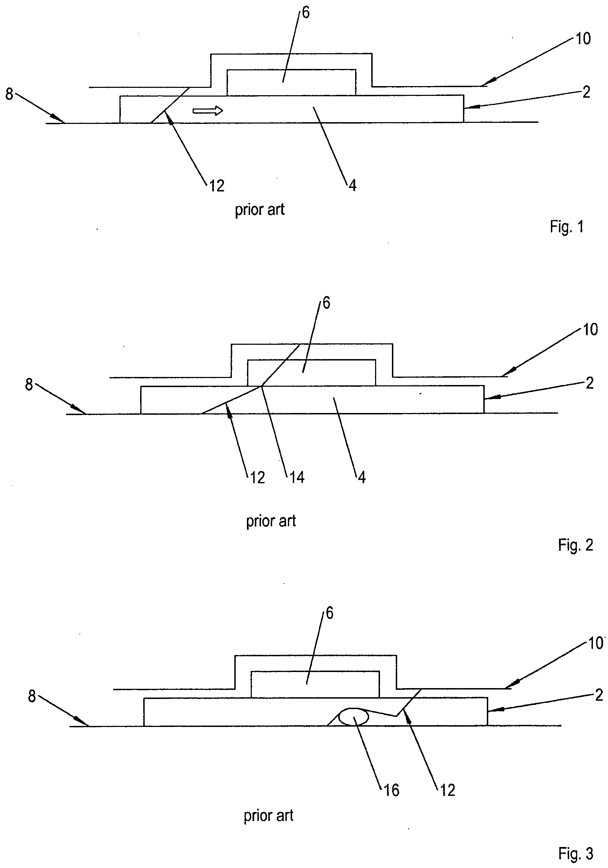

A schematic structure of such infusion or vacuum infusion methods is shown in figures 1 to 3. A component 2 comprising a base laminate 4 and an additional laminate 6 that is to be infused with a resin is placed on a moulding tool 8 and covered with a distribution fabric 10. Laminates 4, 6 are composed of dry, fibre-reinforced semi-finished goods and have the form of mats, knitted fabrics, woven fabrics and the like. Distribution fabric 10 serves to ensure that the resin is distributed evenly in the lengthwise and crosswise directions of component 2 and may be for example a fabric or lattice of polyester or polyamide. Component 2 and distribution fabric 10 are packed in a vacuum bag (not shown) which is supported in sealing manner by moulding tool 8 and is evacuated via a suction device which is also not shown. The resin is fed to distribution fabric 10 via a sprue that is not shown. According to the flow direction of the resin, indicated by the arrow, the sprue is located in an area on the left side of the component and the suction device is located in an area on the right side of the component.

When the resin is added, a flow front 12 is formed and saturates base laminate 4 in a thickness direction from left to right, the resin that is closer to distribution fabric 10 advancing more quickly than the resin that is closer to moulding tool 8, so that flow front 12 is sloped in the thickness direction. A component and a change in the laminate thickness is present in the area of additional laminate 6 and, as shown in figure 2, has the effect of preventing the resin from spreading evenly over the entire cross section of component 2, causing it to spread more slowly in base laminate 4 that is farther from the distribution fabric than in additional laminate 6 that is closer to the distribution fabric, so that a deflection 14 of sorts is formed in flow front 12. As a result, there is a danger that a porous area 16 may be created below flow front 12 in base laminate 4 after additional laminate 6 has been saturated, as shown in figure 3. This is also the case when fibre semi-finished products having different permeabilities are used or geometric variations such as stringer performs, etc. are co-infused.

From the applicant's patent application DE 10 2009 060 699 A1, for example, it is known to alter the flow speed of the resin at least in sections within the distribution fabric. For this purpose, the distribution fabric may be furnished with sections that function as a temporary barrier for the resin, and dissolve after the adjacent resin has been prevented from advancing for certain time, so that the resin is able to continue to spread unobstructed within the distribution fabric.

It is known from US patent application US 2003/211194 A1 to position a second distribution fabric in the area where components become thicker, via which the flow velocity is slowed in the region where the component is thicker.

Document EP 2 149 441 A1 discloses a method for influencing the flow front of the resin by changing the flowability or the flow resistance of the resin. It is claimed that this is possible for example by altering the quantity of resin along a direction of lamination.

From WO 2007/040797 A1 it is known to lift sections of a vacuum bag away from the component to be saturated so that the flow velocity is increased by allowing the resin to flow freely over the component. For this purpose, a solid outer housing is provided and is positioned over the vacuum bag, and a vacuum cavity for lifting the vacuum bag away from the component is defined between the housing wall and the vacuum bag.

From EP 1 484 165 A2 it is known to monitor the progress of the flow front. For this purpose, the resin is exposed to photothermal radiation in such manner that laminate layers below the resin are thermally stimulated, so that it should be possible to determine the advance of the flow front, particularly its speed. At the same time, it is claimed, it is possible to detect air bubbles and the like.

Besides the use of distinct or separate distribution fabrics, which are placed on the component or the semi-finished goods therefor, it is also known from the applicant's patent application DE 10 2007 013 987 A1 to integrate a distribution fabric in the surface of the mould.

Document 2012/026980 A2 relates to a method and a structure for homogenizing two flow fronts. One of the flow fronts spread out in an upper distribution medium and the other flow front spreads out in a component. In order to avoid any cavities in the component due to different flow front velocities, a resin flow control element (resin flow control structure) is positioned within or adjacent a resin distribution media to modify the flow of the upper flow front.

Document Miracle & S L Donaldson D B, "Composites, Vacuum Infusion", 1 December 2001, ASM HANDBOOK / PREPARED UNDER THE DIRECTION OF THE ASM INTERNATIONAL HANDBOOK COMMITTEE, ASM INTERNATIONAL, MATERIALS PARK, OHIO ,USA, PAGE(S) 501 - 511, ISBN: 978-0-87170-703-1, relates to a vacuum infusion, wherein cavities are based on three main conditions: differences in injection distance, differences in reinforcement permeability and runner channels. Runner channels are gaps through which a resin will flow easily in respect to adjacent component areas. This can lead to cavities and dry spots, respectively. In order to avoid such dry spots, emergency outlets are proposed that ensure the dry spots to be impregnated with resin.

Document WO 2009/003477 A1 relates to a method and a device for controlling three flow fronts in such a way that they are lead together at upper vacuum outlets in order to avoid cavities. The flow fronts are generated in separate components areas, by different inlet channels which are activated sequentially. By means of a lower distribution medium, the flow fronts are met in a lower component area and are then lead to upper vacuum outlets.

The object of the invention is to provide an infusion method for manufacturing a fibre-reinforced composite component by which porous areas such as air bubbles are prevented from forming in the composite component or in the construction components thereof.

This object is solved with an infusion method having the features of patent claim 1 and with a structure having the features of patent claim 6.

In an infusion method according to the invention for manufacturing a fibre-reinforced composite component, the composite component is evacuated and at least two separated flow fronts of matrix material are spread out in the composite component. According to the invention at least one of the flow fronts is decelerated and/or guided in respect to its flow directing relative to the other flow front by a control element that is incorporated in a component area of the composite component.

The control element in the at least one component area functions as a constriction for the faster flow front and/or as guiding element for the faster flow front. Both measures, which can also be combined with each other, prevents that the rapid matrix material (rapid/fast flow front) "overtakes" the slow matrix material (slow flow front) in respect to a suction device, so that the formation of porous areas such as air bubbles in the composite component are prevented as well if the flow fronts are merged. If both flow fronts have mainly the same flow velocities, for example, the control element in the at least one component area can function as a guiding element for one flow front to guide this flow front along a long path relative to a flow path of the other flow front. This measure prevents that the matrix material running the short path "overtakes" the matrix material in respect to a suction device, so that the formation of porous areas such as air bubbles in the composite component are prevented as well if the flow fronts are merged.

In an preferred embodiment at least two construction components form at least one overlapping area as component area, wherein the control element is arranged between the construction components, and wherein the at least two flow fronts have different flow velocities in the construction components, and wherein the evacuation is performed via the construction component that is saturated with the slow flow material front. Alternatively, the at least two flow fronts have the same flow velocity in the construction components, wherein one of the flow front is guided along a long path relative to the path of the other flow front, and wherein the evacuation is performed via the construction component that is saturated with the flow front guided along the long path. If the membrane functions as a constriction for the rapid flow front, only a partial flow of the flow front can infiltrate the construction component closer to the suction device such that a flow rate of the rapid flow front will be reduced relative to the slow flow front in the overlapping area. The rapid flow front will be decelerated when reaching the control element and the slow flow front can "overtake". If the control element functions as a guiding element, the rapid flow front and one of the flow fronts, respectively, can be guided along a long path, so that the slow flow front and the other flow front, respectively, can "overtake" the flow front guided along the long path. Thus, one flow front runs a long path and one flow front runs a short path. For example, a matrix flow front is divided into two flow fronts having the same flow velocity. After one of the flow fronts is guided along a long path relative to the other flow front the flow fronts are merged.

In one embodiment, the rapid flow front is totally prevented from saturating the construction component in which the slow flow front is spread out. This embodiment requires an apparatus that is less complex than an apparatus for just decelerating the rapid flow front, as the flow fronts are not merged and which has to be observed actually.

Preferably an adhesive bond based on inter-diffusion between the membrane and the matrix material is established. This prevents the membrane from acting as a separating layer between the construction components. The inter-diffusion of the matrix material with the softened membrane leads to inter-penetrating or semi-inter-penetrating meshes, which establish an adhesive bond having high cohesion forces. This can be realised by using a membrane based on thermoplastic material and a matrix material based on thermoset resin, for example, assumed that material compatibility is given.

In order to accelerate the infusion, a second sprue may be positioned between the at least one overlapping area close to the suction device and the suction device, which sprue may be activated as soon as a flow front of the matrix material from the first sprue reaches it.

A structure/arrangement according to the invention for performing an infusion method for manufacturing a fibre-reinforced composite component has in at least one component area an incorporated control element for decelerating at least one flow front and/or guiding a flow front in respect to its flow directing relative to another flow front through the composite component.

In a preferred embodiment the fibre-reinforced composite component has at least two construction components forming at least one overlapping area as component area, wherein at least one suction device for evacuating the composite component is positioned on the construction component in which a slow flow front compared to a flow front in the other construction component can be spread out or wherein in one component a flow front can be guided along a long path relative to the path of the flow front in the other construction component and wherein in the at least one overlapping area the control element defines at least a passage between the constriction components that is at least gas-permeable.

For defining at least a passage that is at least gas-permeable, in a first variant the control element is a membrane that is at least highly permeable to gas-phase substances such as air. As the control element itself is gas-permeable, it can have the same cross section as the overlapping area. In a second variant, the control element is completely impermeable to gas-phase substances. In order to define the at least gas-permeable passage, in the second variant the control element has a reduced cross section compared to the cross section of the overlapping area. Due to the reduced cross sections of the control element the at least one passage is build lateral to the control element. In a third variant, the guiding element is permeable to gas-phase substances and has a reduced cross section compared to the overlapping area. Preferably, the control element or the membrane, respectively, is made from a thermoplastic material.

In one embodiment, the control element is permeable to the matrix material. For example, the control element is a perforated foil or layer, f.i. a micro perforated foil. The holes can be implemented easily und enable a precise adjustment of the amount of matrix material that passes the control element.

In another embodiment, the control element is permeable to gases but impermeable to the matrix material. Such a control element enables a total blockage of the rapid flow front. Thus, a merging of the separated flow fronts in the overlapping area is totally eliminated.

In order to ensure that the slow flow front is established in the construction component close to the suction device, a distribution fabric in operative connection with the sprue may be positioned on the outer periphery of the construction component farther from the suction device.

If multiple overlapping areas exist, the control element may be arranged in the overlapping area closest to the suction device in each case. The overlapping areas closest to the suction device are the rear overlapping areas considered in the direction of flow of the matrix material, through which the at least one construction component farther from the suction device is evacuated. In this way, the matrix material is able to flow as far as the respective control element, and gas inclusions are prevented in the at least one upper construction component.

In order to ensure that the construction components are bonded evenly in the overlapping areas, in the case of multiple overlapping areas control elements may also be arranged in the overlapping areas farther from the suction device.

Since, in contrast to the control element in the area closest to the suction device or the front overlapping area, the control element in the respective area farthest from the suction device or the front overlapping area does not have to perform a control function (decelerating or guiding) with regard to the construction components in which the rapid flow front is established, the respective front control element may be created so as to be permeable to the matrix material. For example, the control elements in the overlapping areas farthest from the suction device are provided with a hole pattern or a plurality of meshes to allow the matrix material to pass through with little or no obstruction.

In order to accelerate the infusion, at least one further sprue may be included, which may be activated independently of the first sprue and is located in the area of the construction component in which the slow flow front is established. The position of this at least second sprue may be alternated between an overlapping area closer to and farther away from the suction device, in the area of the construction component in which the slow flow front is established. Alternatively or additionally, the at least one additional sprue may be positioned directly opposite the suction device, or between an overlapping area closest to the suction device and the suction device itself.

In order to accelerate the infusion further, the second sprue may be in operative connection with a second distribution fabric which extends in the direction of suction.

Further advantageous embodiments of the invention are the object of the additional dependent claims.

In the following, preferred embodiments of the invention will be explained in greater detail with reference to diagrammatic representations. These show:
- Fig. 1 to Fig. 3: a know structure and process steps in a known infusion process,
- Fig. 4: a first embodiment of a structure according to the invention for an infusion process according to the invention, and
- Fig. 5: a second embodiment of the structure according to the invention.

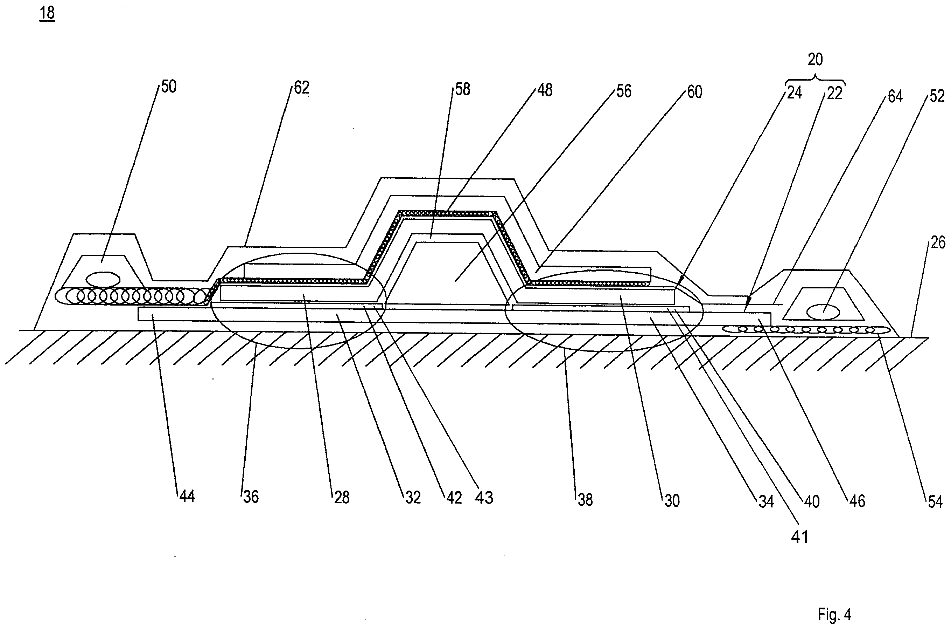

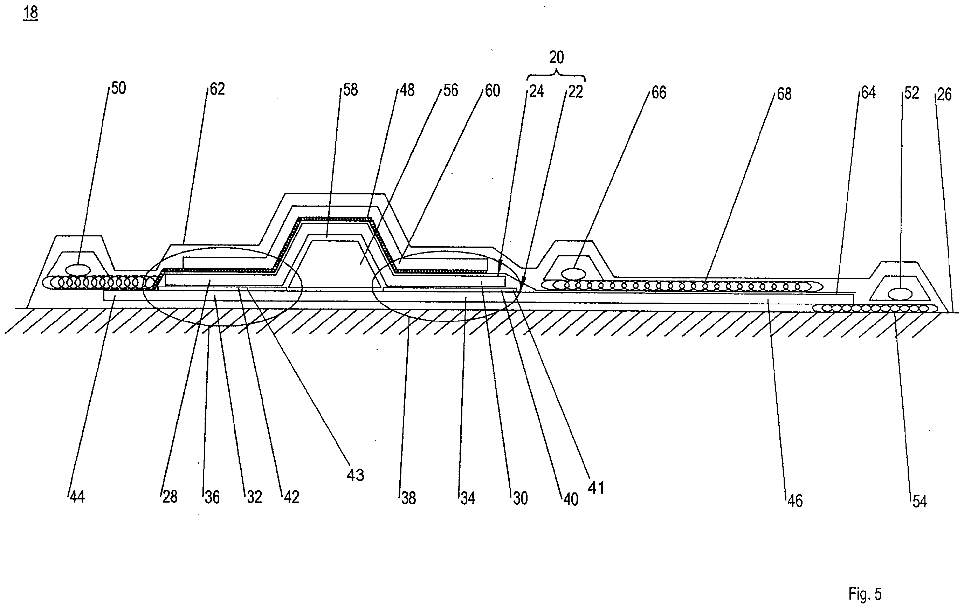

In figures 4 and 5, the same elements are designated by the same reference numbers.

Fig. 4 shows a first embodiment of a structure (arrangement) 18 according to the invention for producing a fibre-reinforced composite component 20. Composite component 20 is saturated in a single production step by resin infusion. Exemplary infusion techniques are resin transfer moulding (RTM), vacuum-assisted process (VAP) and vacuum resin infusion (VARI). Composite component 20 has two construction components 22, 24, which are embedded in a shared plastic matrix. Construction components or component laminates 22, 24 are dry, semi-finished textile products, made for example from carbon or glass fibres, which have been aligned appropriately for a mat, a knitted fabric, a woven fabric or similar. The plastic matrix consists of a matrix material or resin, which is preferably a thermosetting plastic. Of course, however, thermoplastic materials may also be used as the matrix material or resin.

For example, composite component 20 is the skin of an aeroplane fuselage with integrated longitudinal stiffening elements. As shown in figure 3, lower construction component 22 represents the skin section and upper construction component 24 represents the stiffening elements. For the sake of easier understanding, only one stiffening element is shown and thus only one upper construction component 24. Of course the composite component may also be a side shell of a tailfin, a wing shell or similar. In particular, composite component 20 may also be a component that is not associated with the aircraft.

The construction component 22 that forms the skin section is in the form of a panel and is deposited on a moulded surface 26. Moulded surface 26 has a contour that matches an outer contour of the skin section to be formed. For purposes of clarity, moulded surface 26 is shown as being flat in design.

The upper construction component 24 that forms the stiffening element is for example an omega stringer with two foot sections 28, 30 for securing it to lower construction component 22. Foot sections 28, 30 each form an overlapping area 36, 38 with the opposite body sections 32, 34.

Control elements 40, 42 are arranged in the respective overlapping areas 36, 38 between foot sections 28, 30 and the associated body sections 32, 34. In the shown embodiment both control elements 40, 42 have the same cross section as the overlapping areas 36, 28. Upper construction component 24 is thus deposited on lower construction component 22 over membranes 41, 43.

The control element 40 is the rear control element from the point of view of the flow direction. Its function is to decelerate a rapid front in the upper construction component 24 relative to a slow flow front in the lower construction component 22 in the overlapping area 36. The control element 40 is permeable to gases and therefore a membrane. Preferable the membrane 41 is made from a thermoplastic substance. The thermoplastic substance inter-diffuses with the matrix material, such that a (semi-) inter penetrating mesh (SIPN and SIPN-meshes) are established. A structure weakness of the composite component in the overlapping areas thus does not occur. It is permeable to gases but has only a limited permeability for the matrix material or is entirely impermeable to the matrix materialFor instance; the rear membrane 41 is a micro perforated foil.

The control element 42 is in front with respect to the direction of flow and in one embodiment is constructed in exactly the same way and has exactly the same material characteristics as rear membrane 41. But according to another embodiment, the front control element/membrane 42/43 may also be highly resin-permeable. For this purpose, it may be provided with a hole pattern or a plurality of meshes through which the matrix material is able to pass with little or no resistance.

Upper construction component 24 is positioned on lower construction component 22 in such manner that lower construction component 22 has a border area 44, 46 on each side of the overlapping areas 36, 38 that is not covered by upper construction component 24.

The side of the upper construction component 24 facing away from lower construction component 22 is provided with an upper distribution fabric 48, which extends from a sprue 50 towards an suction device 52. Distribution fabric 48 is connected directly to sprue 50 and covers outer periphery of upper construction component 24 entirely or almost entirely. Starting from sprue 50, distribution fabric 48 is laid over front border area 44 of lower construction component 22 and onto front foot section 28 of upper construction component 24. It ends on rear foot section 30 and thus before rear border area 46. However, a lower distribution fabric 54 is disposed below lower construction component 22 in the area of rear border area 46, between moulded surface 26 and construction component 24, and this extends as far as suction device 52 and is this in direct operative connection therewith.

Sprue 50 and suction device 52 are arranged on the side of composite component 20, so that this component and construction components 22, 24 are saturated transversely. They extend longitudinally with respect to construction components 22, 24 ensure that resin is supplied over the entire length thereof.

A support core 56 is provided in order to stabilise the shape of upper construction component 24 during the resin infusion process and the subsequent autoclaving process. Support core 50 is inserted in a trapezoidal cavity 58 formed by construction components 22, 24 between overlapping areas 36, 38. It has a cross sectional surface that matches cavity 58 and may be a dimensionally stable solid body core, an inflatable core tube, a core tube filled with granulate or similar. A pressure element 60 is provided on the outer periphery to stabilise the shape and has an outer contour that replicates that of upper construction component 24 and supported on upper distribution fabric 48.

The entire structure 18 is packed in a vacuum bag 62. Vacuum bag 62 is bonded in gas-tight manner to moulded surface 26, defining a vacuum chamber - without reference number - for construction components 22, 24.

In order to prevent upper distribution fabric 48 and vacuum bag 62 from becoming stuck during the resin infusion and the autoclaving process, a peel ply 64 is disposed directly on top of construction components 22, 24, and the upper distribution fabric 48 is laid on top of this. Additional aids such as ventilation films may also be provided as well as peel ply 64.

In the following, a method according to the invention for manufacturing a composite fibre component 20 having at least two construction components 22, 24 will be explained. Construction components 22, 24 are arranged according to the structure 18 explained in the preceding.

Construction components 22, 24 are evacuated via suction device 52 in the area of lower construction component 22. Then, a resin is introduced to construction components 22, 24 through the sprue 50 and the upper distribution fabric 48. A resin front is established that saturates front border area 44 of lower construction component 22. The resin front is divided into two flow fronts close to overlapping area 36, which is at the front and close to the inflow point and thus at a distance from the suction point. One flow front is formed and saturates upper construction component 24, and another flow front is formed that saturates lower construction component 22.

If front membrane 43 is only gas-permeable, and thus impermeable to resin, the resin in lower construction component 22 is only transported as far as front border area 44. But if front membrane 43 is permeable to resin, front membrane 43 does not represent a resin barrier, and the resin is conveyed to lower construction component 22 not only through front border area 44 but also via front foot section 28. In this way, the resin infusion of lower construction component 22 and thus the entire infusion process proceeds more quickly than in the process variant with a resin-impermeable front membrane 43 described in the preceding.

The application of upper distribution fabric 48 that is laid over upper construction component 24 means that the upper flow front has a faster flow speed than the lower flow front that must pass through lower construction component 22. As a result, the upper rapid flow front outstrips the lower slow flow front in the direction of flow. However, according to this embodiment, the resin-impermeable properties of membrane 41 in overlapping area 38 in the rear and close to the suction device mean that although upper construction component 24 is also evacuated through suction device 54, rear membrane 41 poses an impassable barrier for the upper flow front. Upper construction component 24 thus forms a cul-de-sac for the upper flowfront. The upper flow front cannot flow into lower construction component 22 after it has saturated upper construction component 24, so it cannot "overtake" the lower flow front, and gas inclusions in lower construction component 22 are effectively precluded.

When the rear membrane 41 has only a limited permeability to the matrix material, the upper flow front will be merged as partial flows with the lower flow front. After passing the rear overlapping area 38 or the overlapping area close to the suction device 52, respectively, the rear border area 46 will be saturated by the merged matrix material front.

After passing rear overlapping area 38 close to the suction device, the lower flow front saturates rear border area 46.

After construction components 22, 24 have been saturated, the structure 18 undergoes a heating process. In the heating process, energy is applied to the construction components 22, 24 in such a way that temperatures in the construction components 22, 24 are generated that are preferably higher than a melting temperature of the membranes 41, 43. As a consequence, the membranes 41, 43 and the surrounding matrix material form an adhesive bond based on inter diffusion material and do not form separating layers between construction components 22, 24 in the cured composite component 20.

Figure 5 shows a second embodiment of the structure 18 according to the invention. Unlike the first structure as shown in figure 4, this structure 18 has a second sprue 66 and a second upper distribution fabric 68. Second sprue 66 and second distribution fabric 68 are used to advantageously to the extent that the composite component 20 to be produced according to figure 5 has a more extensive rear border area 48 than the composite component as represented in figure 4. The second sprue 66 and the second upper distribution fabric 68 thus serve to accelerate the resin infusion in the area of border area 46. Second sprue 66 is arranged downstream from rear overlapping area 38, which is close to the suction device. Second distribution fabric 68 is extended over the larger border area 46 and at the same time is offset laterally from rear overlapping area 38 and suction device 52. As is shown in figure 5, second upper distribution fabric 68 preferably extends as far as a lower distribution fabric 54 in the area of suction device 52.

Second sprue 66 is controllable and switchable independently of first sprue 50. Second sprue 66 is preferably activated as soon as the flow front flowing through the lower construction component 22 from first sprue 50 or in the case that the rear membrane 41 is limited permeable the merged matrix material front reaches it.

The application discloses an infusion method for manufacturing a fibre-reinforced composite component, the composite component is evacuated and at least two separated flow fronts of matrix material are spread out in the composite component, wherein at least one of the flow fronts is decelerated and/or guided in respect to its flow directing relative to the other flow front by a control element that is incorporated in a component area of the composite component. The application also discloses a structure for performing such infusion method wherein the control element is arranged between the construction components, wherein in at least one component area a control element is incorporated in the composite component for decelerating at least one flow front and/or guiding a flow front in respect to its flow directing relative to another flow front through the composite component.

### Legend

- 2: Component
- 4: Base laminate
- 6: Additional laminate
- 8: Moulding tool
- 10: Distribution fabric
- 12: Flow front
- 14: Deflection
- 16: Porous area
- 18: Structure/Arrangement
- 20: Composite component
- 22: Construction component
- 24: Construction component
- 26: Moulded surface
- 28: Foot section
- 30: Foot section
- 32: Body section
- 34: Body section
- 36: Overlapping area
- 38: Overlapping area
- 40: Control element
- 41: rear membrane
- 42: Control element
- 43: front membrane
- 44: Border area
- 46: Border area
- 48: Upper distribution fabric
- 50: Sprue
- 52: Suction device
- 54: Lower distribution fabric
- 56: Support core
- 58: Cavity
- 60: Pressure element
- 62: Vacuum bag
- 64: Peel ply
- 66: Second sprue
- 68: Second distribution fabric

## Claims

1. An infusion method for manufacturing a fibre-reinforced composite component (20), wherein the composite component (20) is evacuated and at least two separated flow fronts of matrix material are spread out in the composite component (20) **characterized in that** at least one of the flow fronts is decelerated and/or guided in respect to its flow directing relative to the other flow front by a control element (40, 42) that is incorporated in a component area (36, 38) of the composite component (20).

2. An infusion method according to claim 1, wherein the composite component (20) is formed from at least two construction components (22, 24), which form at least one overlapping area as component area (36, 38), and the at least two flow fronts have different flow velocities in the construction components, and wherein the evacuation is performed via the construction component (22) that is saturated with the slow flow front or the at least two flow fronts have the same flow velocity in the construction components, wherein one of the flow front is guided along a long path relative to the path of the other flow front, and wherein the evacuation is performed via the construction component that is saturated with the flow front guided along the long path.

3. The infusion method according to claim 2, wherein the control element (40, 42) is permeable to gases but impermeable to the matrix material.

4. The infusion method according to claim 3, wherein the control element (40, 42) is a membrane (41, 43), and wherein an adhesive bond based on inter-diffusion between the membrane (41, 43) and the matrix material is established.

5. The infusion method according to claim 2, 3 or 4, wherein a second sprue (66) is positioned between the overlapping area (38) close to the suction device and the suction device (52) itself, which sprue is activated as soon as it is reached by a matrix material flow front from the first sprue (50).

6. A structure (18) for performing an infusion method for manufacturing a fibre-reinforced composite component (20), **characterized in that** in at least in one component area (34, 36) a control element (40, 42) is incorporated in the composite component (20) for decelerating at least one flow front and/or guiding a flow front in respect to its flow directing relative to another flow front through the composite component (20).

7. A structure (18) according to claim 6, whereby the fibre-reinforced composite component (20) has at least two construction components (22, 24) that form at least one overlapping area as a component area (36, 38), wherein at least one suction device (52) for evacuating the composite component (20) is provided, wherein in one component (36, 38) a slow flow front compared to a flow front in the other construction component (38, 36) can be spread out or wherein in one component (36, 38) a flow front can be guided along a long path relative to the path of the flow front in the other construction component (38, 36), and wherein in the at least one overlapping area the control element (40) defines at least one passage between the constriction components that is at least gas-permeable.

8. The structure according to claim 6 or 7, wherein the control element (40) is permeable to the matrix material.

9. The structure according to claim 6 or 7, wherein the control element (40) is impermeable to the matrix material.

10. The structure according to any of the claims 6 to 9, wherein the outer periphery of the at least one construction component (24) farthest from the suction device is covered with a distribution fabric (48) that is in operative connection with an sprue (50).

11. The structure according to any of the claims 6 to 10, wherein in the case of multiple overlapping areas (36, 38) the control element (40) is arranged in the overlapping area (38) close to the suction device in each case.

12. The structure according to claim 11, wherein control elements (42) are arranged in overlapping areas (36) distant from the suction device.

13. The structure according to claim 12, wherein the control elements (42) in the overlapping areas (36) distant from the suction device are permeable to the matrix material.

14. The structure according to any of claims 6 to 13, wherein at least one further sprue (66) is provided and can be activated independently from the first sprue (50) and is arranged in the area of the construction component (22, 24) that is saturated more slowly by the matrix material.

15. The structure according to claim 14, wherein the second sprue (66) is in effective connection with a second distribution fabric, which extends towards the suction device (52).

## Patentansprüche

1. Ein Infusionsverfahren zur Herstellung eines faserverstärkten Verbundbauteils (20), wobei das Verbundbauteil (20) evakuiert wird und mindestens zwei getrennte Fließfronten von Matrixmaterial in dem Verbundbauteil (20) ausgebreitet werden, **dadurch gekennzeichnet, dass** mindestens eine der Fließfronten hinsichtlich ihrer Fließrichtung relativ zu der anderen Fließfront abgebremst und/oder geführt wird mittels eines Steuerelement (40, 42), das in einem Bauteilbereich (36, 38) des Verbundbauteils (20) aufgenommen ist.

2. Ein Infusionsverfahren nach Anspruch 1, wobei das Verbundbauteil (20) aus wenigstens zwei konstruktiven Bauteilen gebildet wird (22, 24), die mindestens einen Überlappungsbereich als Bauteilbereich (36, 38) formen, und die mindestens zwei Fließfronten in den konstruktiven Bauteilen unterschiedliche Strömungsgeschwindigkeiten haben, und wobei die Evakuierung mittels des konstruktiven Bauteils (22) durchgeführt wird, das mit der langsamen Fließfront gesättigt ist, oder die mindestens zwei Fließfronen haben die gleiche Strömungsgeschwindigkeit in den konstruktiven Bauteilen, wobei einer der Fließfronten entlang einem langen Pfad relativ zu dem Pfad der anderen Fließfront geführt wird, und wobei die Evakuierung mittels des konstruktiven Bauteils durchgeführt wird, das von der entlang des langen Pfads geführten Strömungsfront gesättigt ist.

3. Das Infusionsverfahren nach Anspruch 2, wobei das Steuerelement (40, 42) für Gase durchlässig ist, aber für Matrixmaterial undurchlässig ist.

4. Das Infusionsverfahren nach Anspruch 3, wobei das Steuerelement (40, 42) eine Membran (41, 43) ist, und wobei eine Klebeverbindung basierend auf einer Interdiffusion zwischen der Membran (40, 42) und dem Matrixmaterial hergestellt wird.

5. Das Infusionsverfahren nach Anspruch 2, 3 oder 4, wobei ein zweiter Gusskanal (66) zwischen dem Überlappungsbereich (38) nahe an der Saugvorrichtung und der Saugvorrichtung (52) selbst angeordnet ist, welcher Gusskanal aktiviert wird, sobald dieser von einer Fließfront von Matrixmaterial des ersten Gusskanals (50) erreicht wird.

6. Eine Struktur (18) zum Durchführung eines Infusionsverfahrens zum Herstellen eines faserverstärkten Verbundbauteils (20), **dadurch gekennzeichnet, dass** in mindestens einem Bauteilbereich (34, 36) ein Steuerelement (40, 42) in das Verbundbauteil (20) zum Abbremsen mindestens einer Fließfront und/oder Führen einer Fließfront hinsichtlich ihrer Fließrichtung relativ zu einer anderen Fließfront durch das Verbundbauteil aufgenommen ist.

7. Eine Struktur (18) nach Anspruch 6, wobei das faserverstärkte Verbundbauteil (20) mindestens zwei konstruktive Bauteile (22, 24), die mindestens einen Überlappungsbereich als Bauteilbereich (36, 38) formen, wobei mindestens eine Saugvorrichtung (52) zum Evakuieren des Verbundbauteils (20) vorgesehen ist, wobei sich eine im Vergleich zu einer Fließfront eines anderen konstruktiven Bauteils langsame Fließfront in einem Bauteil ausbreiten kann oder wobei eine Fließfront in dem Bauteil entlang eines langen Pfads relativ zu dem Pfad der anderen Fließfront in dem anderen konstruktiven Bauteil geführt werden kann, und wobei das Steuerelement (40) in dem mindestens einen Überlappungsbereich mindestens einen zumindest gasdurchlässigen Durchgang zwischen den konstruktiven Bauteilen bestimmt.

8. Die Struktur nach Anspruch 6 oder 7, wobei das Steuerelement (40) für das Matrixmaterial durchlässig ist.

9. Die Struktur nach Anspruch 6 oder 7, wobei das Steuerelement (40) für das Matrixmaterial undurchlässig ist.

10. Die Struktur nach einem der Ansprüche 6 bis 9, wobei der äußere Randbereich des mindestens einen, am weitesten von der Saugvorrichtung entfernten, konstruktiven Bauteils (24) mit einem Streugewebe bedeckt ist (48), das in Wirkverbindung mit einem Gusskanal (50) ist.

11. Die Struktur nach einem der Ansprüche 6 bis 10, wobei das Steuerelement (40) im Fall von mehreren Überlappungsbereichen (36, 38) jeweils im Überlappungsbereich (38) nahe an der Saugvorrichtung angeordnet ist.

12. Struktur nach Anspruch 11, wobei Steuerelemente (42) in Überlappungsbereichen (36) beabstandet von der Saugvorrichtung angeordnet sind.

13. Die Struktur nach Anspruch 12, wobei die in Überlappungsbereichen (36) beabstandet von der Saugvorrichtung angeordneten Steuerungselemente (42) von dem Matrixmaterial durchlässig sind.

14. Die Struktur nach einem der Ansprüche 6 bis 13, wobei mindestens ein weiterer Gusskanal (66) vorgesehen ist und unabhängig von dem ersten Gusskanal (50) aktiviert werden kann und in dem Bereich des konstruktiven Bauteils (22, 24) angeordnet ist, das langsamer von dem Matrixmaterial gesättigt ist.

15. Struktur nach Anspruch 14, wobei der zweite Gusskanal (66) mit einem zweiten Streugewebe in Wirkverbindung ist, das sich in Richtung der Saugvorrichtung (52) erstreckt.

## Revendications

1. Procédé d'infusion pour la fabrication d'un élément composite renforcé de fibres (20), dans lequel l'élément composite (20) est mis sous vide et au moins deux fronts séparés d'écoulement de matière formant matrice sont répartis dans l'élément composite (20), **caractérisé en ce qu'**au moins l'un des fronts d'écoulement est ralenti et/ou guidé quant à sa direction d'écoulement, par rapport à l'autre front d'écoulement, par un élément de commande (40, 42) qui est incorporé dans une zone d'élément (36, 38) de l'élément composite (20).

2. Procédé d'infusion selon la revendication 1, dans lequel l'élément composite (20) est constitué d'au moins deux éléments de construction (22, 24) qui forment au moins une zone de chevauchement en tant que zone d'élément (36, 38), et lesdits au moins deux fronts d'écoulement ont des vitesses d'écoulement différentes dans les éléments de construction, et dans lequel la mise sous vide est réalisée par l'intermédiaire de l'élément de construction (22) qui est saturé par le front d'écoulement lent ou lesdits au moins deux fronts d'écoulement ont la même vitesse d'écoulement dans les éléments de construction, dans lequel l'un des fronts d'écoulement est guidé le long d'un trajet long par rapport au trajet de l'autre front d'écoulement, et dans lequel la mise sous vide est réalisée par l'intermédiaire de l'élément de construction qui est saturé par le front d'écoulement guidé le long du trajet long.

3. Procédé d'infusion selon la revendication 2, dans lequel l'élément de commande (40, 42) est perméable aux gaz, mais imperméable à la matière formant matrice.

4. Procédé d'infusion selon la revendication 3, dans lequel l'élément de commande (40, 42) est une membrane (41, 43) et dans lequel un joint collé fondé sur l'interdiffusion entre la membrane (41, 43) et la matière formant matrice est établi.

5. Procédé d'infusion selon la revendication 2, 3 ou 4, dans lequel une seconde carotte (66) est positionnée entre la zone de chevauchement (38) proche du dispositif d'aspiration et le dispositif d'aspiration (52) lui-même, laquelle carotte est activée dès qu'elle est atteinte par un front d'écoulement de matière formant matrice provenant de la première carotte (50).

6. Structure (18) destinée à mettre en oeuvre un procédé d'infusion pour la fabrication d'un élément composite renforcé de fibres (20), **caractérisée en ce qu'**au moins dans une zone d'élément (34, 36), un élément de commande (40, 42) est incorporé dans l'élément composite (20) pour ralentir au moins un front d'écoulement et/ou guider un front d'écoulement quant à sa direction d'écoulement par rapport à un autre front d'écoulement, à travers l'élément composite (20).

7. Structure (18) selon la revendication 6, au moyen de laquelle l'élément composite renforcé de fibres (20) comporte au moins deux éléments de construction (22, 24) qui forment au moins une zone de chevauchement en tant que zone d'élément (36, 38), dans laquelle au moins un dispositif d'aspiration (52) destiné à mettre sous vide l'élément composite (20) est mis en place, dans laquelle dans un élément (36, 38), un front d'écoulement lent par comparaison avec un front d'écoulement dans l'autre élément de construction (38, 36) peut être réparti ou dans laquelle dans un élément (36, 38), un front d'écoulement peut être guidé le long d'un trajet long par rapport au trajet du front d'écoulement de l'autre élément de construction (36, 38), et dans laquelle dans ladite au moins une zone de chevauchement, l'élément de commande (40) définit au moins un passage entre les éléments de constriction, qui est au moins perméable aux gaz.

8. Structure selon la revendication 6 ou 7, dans laquelle l'élément de commande (40) est perméable à la matière formant matrice.

9. Structure selon la revendication 6 ou 7, dans laquelle l'élément de commande (40) est imperméable à la matière formant matrice.

10. Structure selon l'une quelconque des revendications 6 à 9, dans laquelle la périphérie extérieure dudit au moins un élément de construction (24) la plus éloignée du dispositif d'aspiration est recouverte d'un tissu de répartition (48) qui est en liaison fonctionnelle avec une carotte (50).

11. Structure selon l'une quelconque des revendications 6 à 10, dans laquelle dans le cas de multiples zones de chevauchement (36, 38), l'élément de commande (40) est disposé dans la zone de chevauchement (38) proche du dispositif d'aspiration, dans chaque cas.

12. Structure selon la revendication 11, dans laquelle les éléments de commande (42) sont disposés dans les zones de chevauchement (36) distantes du dispositif d'aspiration.

13. Structure selon la revendication 12, dans laquelle les éléments de commande (42) dans les zones de chevauchement (36) distantes du dispositif d'aspiration sont perméables à la matière formant matrice.

14. Structure selon l'une quelconque des revendications 6 à 13, dans laquelle au moins une autre carotte (66) est mise en place et peut être activée indépendamment de la première carotte (50) et est disposée dans la zone de l'élément de construction (22, 24) qui est saturée plus lentement par la matière formant matrice.

15. Structure selon la revendication 14, dans laquelle la seconde carotte (66) est en liaison efficace avec un second tissu de répartition qui s'étend vers le dispositif d'aspiration (52).
